# FASCICULE DE BREVET EUROPEEN

(11) **EP 3 727 893 B1**
(45) Date de publication et mention de la délivrance du brevet: **01.12.2021**
(21) Numéro de dépôt: 18833963.4
(22) Date de dépôt: 18.12.2018
(51) Int. Cl.: B60C 11/03

(54) **BANDE DE ROULEMENT DE PNEU COMPRENANT DES RAINURES ONDULANTES**
REIFENLAUFFLÄCHE MIT WELLENFÖRMIGEN RILLEN
TYRE TREAD COMPRISING UNDULATING GROOVES

(30) Priorité: 19.12.2017 FR 1762475
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: ZIVKOVIC, Tony, 63040 CLERMONT-FERRAND Cedex 9 (FR); LARREGAIN, Arnaud, 63040 CLERMONT FERRAND Cedex 9 (FR)
(74) Mandataire: Millanvois, Patrick Jacques Jean
(86) Numéro de dépôt international: PCT/FR2018/053361
(87) Numéro de publication internationale: WO 2019/122677

(56) Documents cités:
- WO-A1-2017/174927
- WO-A1-2017/176280
- FR-A1- 2 995 253

## Description

### DOMAINE DE L'INVENTION

L'invention concerne les bandes de roulement pour pneus et plus particulièrement les dessins de sculpture de ces bandes ainsi que les pneus pourvus de telles bandes dont les performances en drainage de l'eau sur la chaussée par temps de pluie sont rendues plus pérennes, ces bandes de roulement ayant en outre des performances améliorées en usure.

### ÉTAT DE LA TECHNIQUE

Des bandes de roulement de pneu de véhicule poids lourd sont divulguées dans les documents WO 2017/174927 A1, WO 2017/176280 A1 et FR 2 995 253 A1.

De façon connue, les conditions de roulage par temps de pluie d'un véhicule poids lourd requièrent une évacuation rapide de l'eau présente dans la région de contact du pneu avec la chaussée afin d'assurer un contact du matériau constituant la bande de roulement du pneu avec cette chaussée. L'eau qui n'est pas repoussée sur l'avant et sur les côtés du pneu s'écoule ou est captée en partie dans les découpures ou creux formés dans la bande de roulement du pneu.

Ces découpures ou creux forment un réseau d'écoulement de fluide qui se doit d'être pérenne c'est-à-dire pouvoir être efficace pendant toute la durée d'utilisation d'un pneu entre son état neuf et son retrait pour cause d'usure atteignant une limite fixée par la réglementation.

Pour les pneus destinés aux essieux directeur ou aux essieux porteur d'un véhicule poids lourd, il est usuel de former, dans la bande de roulement de ces pneus, des rainures circonférentielles (ou rainures longitudinales) dont la profondeur est égale à l'épaisseur totale de la bande de roulement (cette épaisseur totale ne prenant pas en compte l'épaisseur éventuellement prévue pour permettre un renouvellement partiel des rainures par une opération dite de recreusage (« *regrooving* » en anglais). Ainsi, il est possible d'obtenir une bande de roulement ayant une performance en drainage de l'eau qui est toujours au-dessus d'une performance minimale dite performance de sécurité et cela quel que soit le niveau de l'usure de cette bande.

Pour les pneus de l'état de la technique, le volume total de creux à neuf est en règle générale au moins égal à 10% et au plus égal à 25% du volume total de la bande de roulement destiné à être usé au cours du roulage (le volume total correspondant au volume de matière auquel est ajouté ledit volume total de creux). On constate que ces pneus ont un volume de creux disponible dans l'aire de contact qui est relativement important à l'état neuf (volume de creux disponible signifiant que ce volume est potentiellement susceptible d'être rempli en partie ou en totalité par de l'eau présente sur la chaussée). Le volume de creux s'ouvrant sur la surface de roulement dans le contact est évalué lorsque le pneu est soumis à ses conditions usuelles de gonflage et de charge telles que définies notamment par le règlement E.T.R.T.O. pour l'Europe.

Si des découpures ou plus généralement des cavités sont indispensables au captage et au drainage de l'eau dans la région de contact avec la chaussée, la réduction de volume de matière qui en résulte sur la bande peut affecter sensiblement la performance en usure de cette bande et en conséquence peut réduire la durée d'utilisation du pneu résultant d'une augmentation de la vitesse d'usure de ladite bande.

Parmi les découpures qui peuvent être moulées dans une bande de roulement, on distingue les rainures et les incisions, ces dernières à la différence des rainures, ayant une largeur appropriée pour que les parois en vis-à-vis les délimitant viennent en contact au moins partiellement l'une contre l'autre lors du passage dans le contact. Les rainures génèrent un abaissement des rigidités de compression et de cisaillement puisque ces rainures délimitent des portions de matière sensibles à la déformation comparativement aux portions délimitées par des incisions dont les parois viennent en appui l'une contre l'autre lors du passage dans le contact. Cette diminution de rigidité, dans le cas de la présence de rainures, induit une augmentation des déformations et génère une diminution de la performance en usure de la bande. On observe une usure plus importante pour une distance parcourue fixée et ceci correspond à une augmentation de la vitesse d'usure de la bande. En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Pour limiter l'abaissement de rigidité liée à la présence des rainures nécessitée par le besoin d'assurer le drainage de l'eau, il a été proposé une solution décrite dans la publication de brevet WO 2011/039194. Selon cette solution, il est proposé de former une bande de roulement pour pneu destiné à un véhicule poids lourd, cette bande étant pourvue d'une pluralité de rainures ondulantes dans l'épaisseur de la bande, chaque rainure ondulante s'ouvrant d'une façon discontinue, à espace régulier ou non, sur la surface de roulement à neuf. Chaque rainure ondulante présente des cavités externes ouvertes sur la surface de roulement, ces cavités externes étant disjointes les unes des autres dans la direction principale de la rainure ondulante. La direction principale de la rainure ondulante correspond à la direction de l'écoulement de l'eau dans la rainure lors d'un roulage sur sol revêtu d'eau. Cette rainure ondulante comprend outre les cavités externes, une pluralité de cavités internes formées à l'intérieur de la bande de roulement, ces cavités internes étant placées radialement et en totalité à l'intérieur par rapport à la surface de roulement à l'état neuf entre les cavités externes. Les cavités internes peuvent être prévues pour être situées à différents niveaux de profondeurs dans l'épaisseur de la bande.

En outre, la continuité de l'écoulement d'eau, ou plus généralement de fluide, dans chaque rainure ondulante lorsque le pneu est, à l'état neuf, assurée par la présence de cavités de liaison ou cavités intermédiaires, chaque cavité de liaison reliant une cavité externe à une cavité interne. Chaque cavité de liaison possède deux extrémités, l'une de ces extrémités étant reliée à une cavité interne et l'autre extrémité étant reliée à une cavité externe.

Des incisions sont prévues pour relier, à la surface de roulement à neuf, les cavités internes et les cavités de liaison afin de faciliter le moulage et le démoulage de la bande de roulement.

Grâce à la présence de ces cavités de liaison reliant les cavités internes et les cavités externes, il est possible, lors d'un roulage sur une chaussée revêtue d'eau, d'assurer une circulation de l'eau d'une cavité externe vers une cavité interne et ainsi d'obtenir un meilleur drainage de l'eau et une meilleure ventilation thermique de la bande de roulement. De plus, grâce à cette structure de bande de roulement, on obtient un volume de creux approprié et diminué par rapport à celui que l'on a avec des rainures ouvertes en totalité sur la surface de roulement. Ce type de rainure ondulante permet de limiter la réduction de rigidité de la bande de roulement à l'état neuf.

Toutefois, il a été constaté que la présence d'une rainure ondulante pouvait générer du bruit en roulage, et que ce bruit était causé notamment par le passage des cavités externes dans le contact et plus particulièrement le passage des régions d'extrémité de ces cavités externes dans le contact. En effet, chaque cavité externe comprend un contour d'arête ayant une géométrie plus ou moins allongée dans la direction principale de la rainure et se terminant par des régions d'extrémité reliées aux arêtes des incisions surmontant les cavités internes et les cavités de liaison. Ces extrémités des cavités externes correspondent aux régions de raccordement entre la cavité externe et une cavité de liaison. La performance en bruit étant l'objet de réglementation dans le domaine des pneus pour poids lourd, il est important de limiter le plus possible toutes les sources potentielles génératrices de bruit en roulage à l'état neuf.

### Définitions :

Chaque cavité externe comprend des parois en vis-à-vis, ces parois étant reliées entre elles par un fond. La distance entre les parois en vis-à-vis définit une largeur maximale de la cavité externe. La distance entre les points du fond les plus à l'intérieur de la bande de roulement et la surface de roulement à neuf définit une profondeur de la cavité externe. Chaque cavité externe a une longueur moyenne mesurée entre les régions d'extrémité du contour d'arête à neuf selon la direction principale de la rainure ondulante.

La surface de roulement d'une bande de roulement correspond à l'ensemble des surfaces élémentaires de la bande pouvant venir en contact avec une chaussée lors du roulage d'un pneu pourvu d'une telle bande de roulement.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

L'épaisseur totale d'une bande de roulement est mesurée à l'état neuf, sur le plan médian équatorial du pneu pourvu de cette bande, entre la surface de roulement et la partie radialement la plus à l'extérieur de l'armature de sommet.

Une bande de roulement a une épaisseur maximale de matière à user en roulage, cette épaisseur maximale de matière à user étant en règle générale inférieure à l'épaisseur totale de la bande de roulement.

Le plan médian équatorial est un plan perpendiculaire à l'axe de rotation divisant le pneu en deux moitiés égales.

Les conditions usuelles de roulage du pneu ou conditions d'utilisation sont celles qui sont définies par la norme E.T.R.T.O. pour des roulages européens ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSE DE L'INVENTION

Pour résoudre ce problème de bruit pouvant être constaté avec une bande de roulement pourvue d'au moins une rainure ondulante dans l'épaisseur de la bande de roulement, l'invention propose une bande de roulement pour pneu de véhicule poids lourd, cette bande de roulement comprenant une surface de roulement destinée à venir en contact avec une chaussée lors du roulage et s'ouvrant sur cette surface de roulement au moins une rainure ondulante dans l'épaisseur de la bande de roulement, c'est à dire une rainure s'ouvrant à neuf d'une façon discontinue sur la surface de roulement à neuf, chaque rainure ondulante présentant à neuf des cavités externes ouvertes sur la surface de roulement et des cavités internes entièrement situées sous la surface de roulement à neuf, ces cavités internes étant reliées aux cavités externes par des cavités de liaison, chaque cavité externe étant délimitée par des parois latérales placées en vis-à-vis l'une par rapport à l'autre, ces parois latérales se rejoignant sur un fond de la cavité externe, les points les plus à l'intérieur de ce fond étant situés à une distance Pce de la surface de roulement à neuf, chaque cavité externe coupant la surface de roulement à neuf selon un contour d'arête présentant une longueur maximale Ls mesurée dans la direction principale de la rainure ondulante, ce contour d'arête délimitant une ouverture présentant deux régions d'extrémité et ayant une surface totale Se mesurée sur la surface de roulement à neuf, le fond de chaque cavité externe ayant une longueur maximale Lf.

Cette bande de roulement est telle que, sur chaque région d'extrémité de chaque cavité externe dans la direction de l'écoulement de fluide à l'intérieur de ladite rainure, il est formé au moins une lame mince de matière caoutchoutique pour réduire la surface ouverte de l'ouverture de chaque cavité externe vue de la surface de roulement à neuf, chaque lame mince étant solidaire d'au moins une des parois latérales délimitant la rainure ondulante.

Par lame mince, on entend dans la présente description une lame de matière caoutchoutique issue du matériau composant la bande de roulement, cette lame mince ayant une épaisseur faible mais non nécessairement constante. Par épaisseur faible, il faut comprendre une épaisseur appropriée pour permettre la flexion de la lame mince vers l'intérieur de la cavité lors du roulage sur une chaussée revêtue d'eau.

Avantageusement, chaque lame mince a une épaisseur au plus égale à 3 mm pour autoriser la flexion sous l'action d'un flux de liquide dans la rainure ondulante. Encore plus préférentiellement, l'épaisseur de chaque lame mince est au plus égale à 2 mm.

Grâce à cette disposition, il est possible de modifier le bruit de résonance généré par la circulation d'air à l'intérieur de chaque rainure ondulante entre l'état neuf et une usure partielle, ces lames de matière venant fermer en partie les cavités externes. Grâce à la flexibilité des lames minces, la circulation de l'eau n'est toutefois pas trop perturbée lors des roulages sur route recouverte d'eau.

Les lames minces peuvent être solidaires des parois de la cavité externe ou encore des parois délimitant les cavités de liaison.

Avantageusement, les lames minces ferment au moins 20% de la surface totale Se de chaque ouverture des cavités externes sur la surface de roulement à neuf. Ces lames minces peuvent fermer jusqu'à 100% de la surface totale, leur flexibilité devant être déterminée en conséquence afin de laisser la possibilité d'un écoulement d'eau dans la rainure.

Lorsqu'une incision est formée à neuf entre chaque cavité de liaison et chaque cavité interne et la surface de roulement, cette incision favorisant le démoulage de la bande de roulement pourvue de cavités internes, il est avantageux que chaque lame mince soit fendue en deux parties par une coupure prolongeant l'incision formée entre la cavité de liaison et la surface de roulement à neuf.

Lorsque la longueur du fond Lf des cavités externes est inférieure à la longueur maximale Ls de l'ouverture des cavités externes, il est judicieux que la longueur de chaque lame mince soit au moins égale à la moitié de l'écart entre la longueur maximale Ls de l'ouverture des cavités externes et la longueur du fond Lf afin de réaliser une fermeture au moins partielle de la section des cavités de liaison.

Avantageusement, chaque lame mince a des dimensions appropriées pour permettre sa flexion sans toucher le fond de la cavité externe dans laquelle elle est formée.

Une variante intéressante de l'invention consiste à décaler radialement vers l'intérieur de la bande de roulement les lames minces de manière à conserver une certaine efficacité au moins jusqu'à une usure partielle de la bande de roulement plus ou moins importante. Préférentiellement, cette usure partielle est choisie pour être au plus égale à 50% de la profondeur Pce des cavités externes.

Chaque lame mince peut avoir une épaisseur qui est variable afin d'assurer une plus grande flexibilité de la lame mince tout en assurant une bonne tenue mécanique à neuf.

L'invention concerne également un pneu pourvu d'une bande de roulement telle que décrite et encore plus particulièrement un pneu destiné à équiper un véhicule poids lourd.

À titre de variante d'exécution de l'invention, il est possible de réaliser des configurations non nécessairement symétriques : par exemple, dans le cas où pneu est prévu pour avoir un sens de rotation préférentiel indiqué par un repérage spécifique, les lames minces peuvent être différenciées aux deux extrémités d'une même cavité externe. Les surfaces respectives des lames minces peuvent être différentes entre l'extrémité entrant la première dans le contact et celle sortant du contact.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue en coupe d'une première variante d'une rainure ondulante formée dans une bande de roulement selon l'invention ;
La figure 2 montre une vue en surface de la bande de roulement montrée avec la figure 1 ;
La figure 3 montre en coupe une deuxième variante d'une rainure ondulante selon l'invention.

### DESCRIPTION DES FIGURES

Pour faciliter la lecture des figures, des signes de référence identiques sont employés pour la description de variantes de l'invention dès lors que ces signes de référence renvoient à des éléments d'une même nature qu'elle soit structurelle ou bien fonctionnelle.

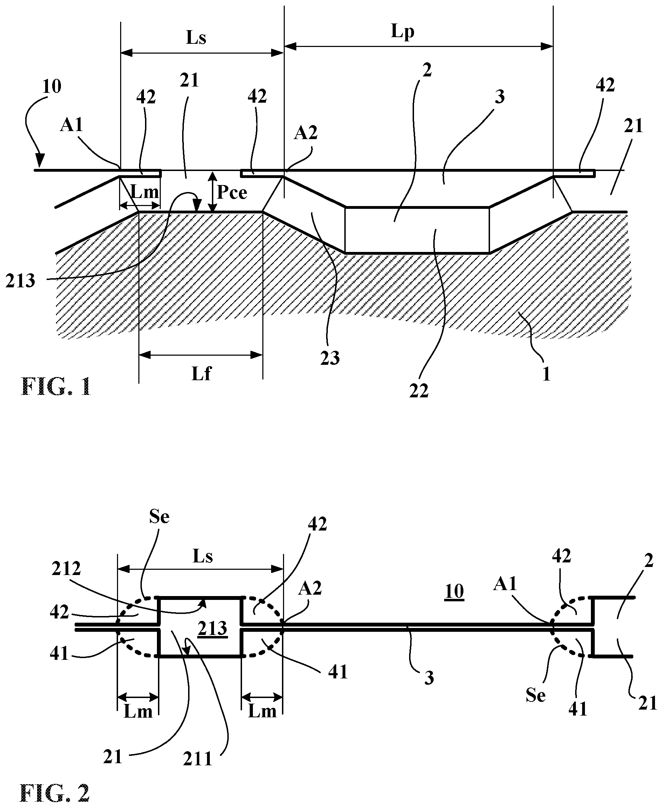

La figure 1 montre, en coupe dans un plan perpendiculaire à l'axe de rotation d'un pneu de dimension 315/70R22.5, une partie d'une bande de roulement 1 comprenant une rainure ondulante 2, cette rainure ondulante 2 s'étendant dans la direction circonférentielle du pneu. En combinaison avec cette figure 1, la figure 2 montre une vue partielle de la surface de roulement 10 de la bande de roulement 1. Le plan de coupe de la figure 1 correspond au plan de l'incision longitudinale 3.

Cette rainure ondulante 2 comprend une pluralité de cavités externes 21 et une pluralité de cavités internes 22, ces cavités externes et internes étant disposées en alternance dans la direction principale de la rainure ondulante 2, c'est à dire dans la direction de l'écoulement de fluide à l'intérieur de ladite rainure (dans le cas décrit, cette direction correspond à la direction circonférentielle).

Chaque cavité externe 21 s'ouvre à neuf sur la surface de roulement 10 de la bande de roulement 1, cette surface de roulement 1 correspondant à la surface de la bande de roulement destinée à venir en contact avec la chaussée lors du roulage.

Chaque cavité interne 22 a la forme d'un canal entièrement moulé sous la surface de roulement 10 à neuf et est destiné à s'ouvrir sur la surface de roulement après une usure partielle prédéterminée de la bande de roulement 1.

Des cavités de liaison 23 sont formées entre les cavités externes 21 et les cavités internes 22 de manière à assurer une continuité d'écoulement dans la rainure ondulante 2 à neuf et cela jusqu'à une usure partielle de la bande correspondant à sensiblement la disparition des cavités externes.

Par ailleurs, il est formé une incision 3 entre la surface de roulement 10 à neuf et les cavités de liaison 23 et les cavités internes 22, cette incision 3 étant prévue pour se fermer au moins en partie lors du passage dans le contact avec la chaussée. Ce n'est pas le cas sur l'exemple représenté ici, mais chaque arête formée sur la surface de roulement par cette incision 3 peut présenter, de manière connue, un chanfrein, lequel disparait après une usure partielle.

Chaque cavité externe 21 est délimitée par des parois latérales 211, 212 disposées en vis-à-vis et distantes l'une de l'autre d'une distance appropriée pour qu'il n'y ait pas contact entre ces parois latérales 211, 212 lors du passage dans le contact avec la chaussée. Ces parois latérales 211, 212 sont reliées l'une à l'autre par un fond 213, les points de ce fond 213 les plus à l'intérieur de la cavité externe 21 étant situés à une distance Pce de la surface de roulement 10 à neuf.

Les arêtes formées par les parois latérales 211, 212 de la cavité externe 21 sur la surface de roulement 10 délimitent une ouverture 210 de forme allongée ayant deux extrémités dans la direction de l'écoulement de fluide à l'intérieur de ladite rainure, notées respectivement A1 et A2. À chacune de ces extrémités prend naissance une cavité de liaison 23 s'enfonçant dans la bande de roulement pour connecter la cavité externe 21 à des cavités internes 22.

L'ouverture 210 de chaque cavité externe 21 a une longueur maximale Ls déterminée par les points les plus éloignés sur la surface de roulement à neuf et une longueur maximale de fond Lf mesurée sur le fond 213 de ladite cavité externe. Dans le présent exemple, la longueur maximale Ls de l'ouverture 210 est supérieure à la longueur Lf du fond 213.

On voit dans cette première variante décrite que deux lames minces 41, 42 ont été moulées à chaque extrémité A1 et A2 de l'ouverture 210 de chaque cavité externe 21. Ces lames minces 41, 42 ont ici une même épaisseur égale à 2 mm et une longueur maximale Lm mesurée dans la direction principale de la cavité externe 21 (direction reliant A1 à A2). Cette longueur Lm est ici égale à 15 mm et est appropriée pour recouvrir partiellement le fond 213 de la cavité externe 21 et donc recouvrir l'ouverture de la cavité de liaison 23. Dans cet exemple, la longueur de l'ouverture des cavités externes est égale à 55 mm, la profondeur Pce est égale à 6 mm ; la longueur des cavités de liaison égale à 10 mm et celle des cavités internes 55 mm.

Dans la présente variante, chaque lame mince 41, 42 est solidaire des parois latérales 211, 212 délimitant la cavité externe 21 et est formée pour être au niveau de la surface de roulement 10 à neuf.

La figure 2, montrant la même variante de bande de roulement, permet de voir la surface de roulement 10 à neuf sur laquelle s'ouvrent des cavités externes 21 prolongées dans l'intérieur de la bande de roulement par des cavités de liaison et des cavités internes. On visualise également bien sur cette figure 2 la surface totale Se de l'ouverture 210 qui comprend à la fois la partie ouverte sensiblement rectangulaire et les parties couvertes par les quatre lames minces 41, 42. Le contour de la surface Se suit les arêtes visibles des parois latérales 211 et 212 et les pointillés correspondant à leur prolongement (caché par les lames minces) vers les extrémités A1, A2 de la cavité externe.

On voit également sur cette figure 2, la géométrie de surface des lames minces 41, 42 formées à chaque région d'extrémité A1, A2 des cavités externes 21. Cette géométrie de surface est ici sensiblement triangulaire et l'ensemble des quatre lames minces formées sur une même ouverture 210 couvre une surface égale ici à 200 mm² soit environ 36% de la surface totale Se de l'ouverture 210 délimitée par le contour d'arête de la cavité externe 21 sur la surface de roulement 10 à neuf comme expliqué plus haut.

Grâce à cette disposition, il est possible de réduire le bruit de contact résultant de l'entrée et de la sortie du contour d'arête de chaque cavité externe dans le contact avec une chaussée en roulage lorsque le pneu est à l'état neuf.

Pour assurer une certaine pérennité de cet effet technique, il est intéressant de décaler vers l'intérieur de la bande de roulement les lames minces fermant partiellement ou en totalité les ouvertures de chaque cavité externe sur la surface de roulement.

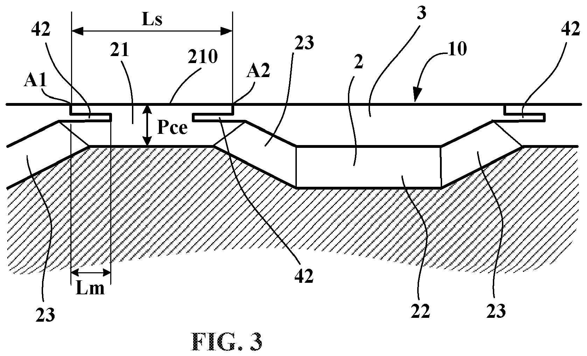

La deuxième variante décrite avec le support de la figure 3 présente le cas de lames minces réalisées à l'intérieur de la bande de roulement à une distance non nulle de la surface de roulement à neuf.

Sur la figure 3, on voit, vue en coupe, une deuxième variante d'une rainure ondulante 2 selon l'invention. Dans cette variante reprenant les éléments de la première variante, à savoir la présence à chaque extrémité de l'ouverture de chaque cavité externe 21 de deux lames minces, chaque lame mince 42 est décalée par rapport à la surface de roulement 10 à neuf d'une distance correspondant sensiblement au tiers de la profondeur Pce de la cavité externe 21. Sur cette figure 3 une seule lame mince 42 est visible mais il y a effectivement une autre lame mince en combinaison avec ladite lame mince 42 comme montré avec les figures 1 et 2.

Pour réaliser ce décalage, chaque lame mince 42 prend naissance à la fois sur l'une des parois délimitant la cavité externe 21 mais également sur la paroi délimitant la cavité de liaison 23. Grâce à sa rigidité appropriée, chaque lame mince 41, 42 réalise une fermeture au moins partielle de l'ouverture 210 de chaque cavité externe 21 ce qui est favorable quant à la génération de bruit en roulage sur route sèche. Par ailleurs la flexibilité adaptée de chaque lame 41, 42 autorise l'écoulement de liquide sur toute l'ouverture 210 des cavités externes 21 sans trop obstruer les cavités de liaison 23. Dans cet exemple, la longueur Lm des lames minces est adaptée afin que lesdites lames minces ne soient pas contraintes par leur éventuel contact avec la paroi de la cavité externe ou de la cavité de liaison lors de la flexion sous l'effet de la circulation d'un liquide dans la rainure 2.

Dans une variante non montrée ici, chaque lame mince peut avoir une épaisseur non uniforme ; notamment, il peut être judicieux que l'épaisseur soit maximale aux points de liaison avec les parois. Cette variation d'épaisseur peut être combinée avec l'une ou l'autre des variantes précédemment décrites. Comme cela a déjà été dit les lames peuvent être appropriées pour fermer de façon substantielle l'ouverture de chaque cavité, c'est à dire en totalité ou en quasi-totalité.

Bien entendu, l'invention n'est pas limitée aux exemples décrits et représentés et diverses modifications peuvent y être apportées sans sortir du cadre tel que défini par les revendications.

## Revendications

1. Bande de roulement (1) pour pneu de véhicule poids lourd, cette bande de roulement (1) comprenant une surface de roulement (10) destinée à venir en contact avec une chaussée lors du roulage et s'ouvrant sur cette surface de roulement au moins une rainure (2) ondulante dans l'épaisseur de la bande de roulement, c'est à dire une rainure s'ouvrant d'une façon discontinue sur la surface de roulement à neuf, chaque rainure ondulante (2) présentant à neuf des cavités externes (21) ouvertes sur la surface de roulement (10) et des cavités internes (22) entièrement situées sous la surface de roulement (10) à neuf, ces cavités internes (22) étant reliées aux cavités externes (21) par des cavités de liaison (23), chaque cavité externe (21) étant délimitée par des parois latérales (211, 212) placées en vis-à-vis l'une par rapport à l'autre et se rejoignant sur un fond (213), les points les plus à l'intérieur de ce fond (213) étant situés à une distance Pce de la surface de roulement (10) à neuf, chaque cavité externe (21) coupant la surface de roulement (10) selon un contour d'arête présentant une longueur maximale Ls mesurée dans la direction principale de la rainure ondulante, ce contour d'arête délimitant une ouverture (210) de forme allongée présentant deux régions d'extrémité (A1, A2) et ayant une surface totale Se mesurée sur la surface de roulement (10), le fond (213) de chaque cavité externe (21) ayant une longueur maximale Lf, cette bande de roulement (1) étant **caractérisée en ce que**, sur chaque région d'extrémité (A1, A2) dans la direction de l'écoulement de fluide à l'intérieur de ladite rainure de chaque cavité externe (21), il est formé au moins une lame mince (41, 42) de matière caoutchoutique, cette lame mince (41, 42) étant solidaire d'au moins une des parois latérales (211, 212) délimitant la rainure ondulante pour réduire la surface ouverte de l'ouverture (210) de chaque cavité externe (21) vue de la surface de roulement (10) à neuf.

2. Bande de roulement de pneu selon la revendication 1 **caractérisée en ce que** chaque lame mince (41, 42) a une épaisseur au plus égale à 3 mm et encore plus préférentiellement au plus égale à 2 mm.

3. Bande de roulement de pneu selon la revendication 1 ou la revendication 2 **caractérisée en ce que** les lames minces (41, 42) couvrent au moins 20% de la surface totale Se de chaque ouverture des cavités externes sur la surface de roulement à neuf.

4. Bande de roulement de pneu selon l'une des revendications 1 à 3 **caractérisée en ce que**, lorsque la longueur du fond Lf des cavités externes est inférieure à la longueur maximale Ls de l'ouverture des cavités externes, la longueur de chaque lame mince (41, 42) est au moins égale à la moitié de l'écart entre la longueur maximale Ls de l'ouverture des cavités externes et la longueur du fond Lf.

5. Bande de roulement de pneu selon l'une des revendications 1 à 4 **caractérisée en ce que** les lames minces (41, 42) sont décalées radialement vers l'intérieur de la bande de roulement de manière à conserver une certaine efficacité au moins jusqu'à une usure partielle de la bande de roulement, cette usure partielle étant choisie pour être au plus égale à 50% de la profondeur Pce des cavités externes.

6. Bande de roulement de pneu selon la revendication 5 **caractérisée en ce que** chaque lame mince (41, 42) a une épaisseur variable afin d'assurer une plus grande flexibilité de la lame mince tout en assurant une bonne tenue mécanique à neuf.

7. Bande de roulement de pneu selon l'une des revendications 1 à 6 **caractérisée en ce que** la rainure ondulante (2) est une rainure longitudinale.

8. Pneu comprenant une bande de roulement selon l'une des revendications 1 à 7 **caractérisé en ce que** ce pneu est destiné à équiper un véhicule poids lourd.

9. Pneu selon la revendication 8 **caractérisé en ce que** ce pneu est prévu pour avoir un sens de rotation préférentiel et **en ce que** les lames minces (41, 42) des deux extrémités (A1, A2) de chaque ouverture sont différentes géométriquement, notamment par leurs surfaces de couverture respectives de ladite ouverture.

## Patentansprüche

1. Laufstreifen (1) für einen Schwerlastfahrzeugreifen, wobei dieser Laufstreifen (1) eine Lauffläche (10) umfasst, die dazu bestimmt ist, beim Fahren mit der Fahrbahn in Kontakt zu kommen, und wobei sich an dieser Lauffläche wenigstens eine in der Dicke des Laufstreifens verlaufende wellenförmige Rille (2) öffnet, das heißt eine Rille, die sich nicht durchgehend an der Lauffläche im Neuzustand öffnet, wobei jede wellenförmige Rille (2) im Neuzustand äußere Hohlräume (21), die an der Lauffläche (10) offen sind, und innere Hohlräume (22), die sich vollständig unter der Lauffläche (10) im Neuzustand befinden, aufweist, wobei diese inneren Hohlräume (22) mit den äußeren Hohlräumen (21) durch Verbindungshohlräume (23) verbunden sind, wobei jeder äußere Hohlraum (21) von Seitenwänden (211, 212) begrenzt wird, die einander gegenüberliegend angeordnet sind und an einem Boden (213) zusammentreffen, wobei sich die innersten Punkte dieses Bodens (213) in einem Abstand Pce von der Lauffläche (10) im Neuzustand befinden, wobei jeder äußere Hohlraum (21) die Lauffläche (10) entlang einer Kantenkontur schneidet, die eine in der Hauptrichtung der wellenförmigen Rille gemessene maximale Länge Ls aufweist, wobei diese Kantenkontur eine Öffnung (210) von lang gestreckter Form begrenzt, die zwei Endbereiche (A1, A2) aufweist und eine an der Lauffläche (10) gemessene Gesamtfläche Se hat, wobei der Boden (213) jedes äußeren Hohlraums (21) eine maximale Länge Lf aufweist, wobei dieser Laufstreifen (1) **dadurch gekennzeichnet ist, dass** auf jedem Endbereich (A1, A2), in der Fließrichtung von Fluid im Inneren der Rille, jedes äußeren Hohlraums (21) wenigstens eine dünne Lamelle (41, 42) aus Kautschukmaterial ausgebildet ist, wobei diese dünne Lamelle (41, 42) mit wenigstens einer der die wellenförmige Rille begrenzenden Seitenwände (211, 212) fest verbunden ist, um die offene Fläche der Öffnung (210) jedes äußeren Hohlraums (21), von der Lauffläche (10) im Neuzustand aus gesehen, zu verringern.

2. Reifenlaufstreifen nach Anspruch 1, **dadurch gekennzeichnet, dass** jede dünne Lamelle (41, 42) eine Dicke aufweist, die höchstens 3 mm beträgt und, noch stärker bevorzugt, höchstens 2 mm beträgt.

3. Reifenlaufstreifen nach Anspruch 1 oder Anspruch 2, **dadurch gekennzeichnet, dass** die dünnen Lamellen (41, 42) mindestens 20 % der Gesamtfläche Se jeder Öffnung der äußeren Hohlräume an der Lauffläche im Neuzustand bedecken.

4. Reifenlaufstreifen nach einem der Ansprüche 1 bis 3, **dadurch gekennzeichnet, dass**, wenn die Länge des Bodens Lf der äußeren Hohlräume kleiner als die maximale Länge Ls der Öffnung der äußeren Hohlräume ist, die Länge jeder dünnen Lamelle (41, 42) wenigstens gleich der Hälfte der Differenz zwischen der maximalen Länge Ls der Öffnung der äußeren Hohlräume und der Länge des Bodens Lf ist.

5. Reifenlaufstreifen nach einem der Ansprüche 1 bis 4, **dadurch gekennzeichnet, dass** die dünnen Lamellen (41, 42) radial zum Inneren des Laufstreifens hin versetzt sind, so dass sie eine gewisse Wirksamkeit wenigstens bis zu einer teilweisen Abnutzung des Laufstreifens behalten, wobei diese teilweise Abnutzung so gewählt ist, dass sie höchstens 50 % der Tiefe Pce der äußeren Hohlräume beträgt.

6. Reifenlaufstreifen nach Anspruch 5, **dadurch gekennzeichnet, dass** jede dünne Lamelle (41, 42) eine variable Dicke aufweist, um eine größere Flexibilität der dünnen Lamelle sicherzustellen und dabei gleichzeitig eine gute mechanische Haltbarkeit im Neuzustand sicherzustellen.

7. Reifenlaufstreifen nach einem der Ansprüche 1 bis 6, **dadurch gekennzeichnet, dass** die wellenförmige Rille (2) eine Längsrille ist.

8. Reifen, welcher einen Laufstreifen nach einem der Ansprüche 1 bis 7 umfasst, **dadurch gekennzeichnet, dass** dieser Reifen zur Ausrüstung eines Schwerlastfahrzeugs bestimmt ist.

9. Reifen nach Anspruch 8, **dadurch gekennzeichnet, dass** dieser Reifen dafür vorgesehen ist, eine bevorzugte Drehrichtung aufzuweisen, und dadurch, dass die dünnen Lamellen (41, 42) der zwei Enden (A1, A2) jeder Öffnung geometrisch verschieden sind, insbesondere was ihre jeweiligen Flächen der Bedeckung der Öffnung betrifft.

## Claims

1. Tread (1) for a heavy-duty vehicle tyre, this tread (1) comprising a tread surface (10) intended to come into contact with a road surface during running and, opening onto this tread surface, at least one groove (2) undulating in the thickness of the tread, that is to say a groove that opens discontinuously onto the tread surface when new, each undulating groove (2) having, when new, external cavities (21) that are open onto the tread surface (10) and internal cavities (22) that are entirely situated beneath the tread surface (10) when new, these internal cavities (22) being connected to the external cavities (21) by linking cavities (23), each external cavity (21) being delimited by lateral walls (211, 212) placed facing one another and meeting at a bottom (213), the innermost points of this bottom (213) being situated at a distance Pce from the tread surface (10) when new, each external cavity (21) intersecting the tread surface (10) along a corner edge contour having a maximum length Ls measured in the main direction of the undulating groove, this corner edge contour delimiting an opening (210) of elongate form having two end regions (A1, A2) and having a total surface area Se measured on the tread surface (10), the bottom (213) of each external cavity (21) having a maximum length Lf, this tread (1) being **characterized in that**, in each end region (A1, A2) in the direction of the flow of fluid inside said groove of each external cavity (21), at least one thin blade (41, 42) of rubbery material is formed, this thin blade (41, 42) being secured to at least one of the lateral walls (211, 212) delimiting the undulating groove so as to reduce the open surface area of the opening (210) of each external cavity (21) viewed from the tread surface (10) when new.

2. Tyre tread according to Claim 1, **characterized in that** each thin blade (41, 42) has a thickness at most equal to 3 mm and even more preferentially at most equal to 2 mm.

3. Tyre tread according to Claim 1 or Claim 2, **characterized in that** the thin blades (41, 42) cover at least 20% of the total surface area Se of each opening of the external cavities on the tread surface when new.

4. Tyre tread according to one of Claims 1 to 3, **characterized in that**, when the length of the bottom Lf of the external cavities is smaller than the maximum length Ls of the opening of the external cavities, the length of each thin blade (41, 42) is at least equal to half the difference between the maximum length Ls of the opening of the external cavities and the length of the bottom Lf.

5. Tyre tread according to one of Claims 1 to 4, **characterized in that** the thin blades (41, 42) are radially offset towards the inside of the tread so as to retain a certain level of effectiveness at least up to partial wear of the tread, this partial wear being chosen so as to be at most equal to 50% of the depth Pce of the external cavities.

6. Tyre tread according to Claim 5, **characterized in that** each thin blade (41, 42) has a variable thickness so as to ensure greater flexibility of the thin blade while ensuring good mechanical integrity when new.

7. Tyre tread according to one of Claims 1 to 6, **characterized in that** the undulating groove (2) is a longitudinal groove.

8. Tyre comprising a tread according to one of Claims 1 to 7, **characterized in that** this tyre is intended to be fitted to a heavy-duty vehicle.

9. Tyre according to Claim 8, **characterized in that** this tyre is designed to have a preferential direction of rotation and **in that** the thin blades (41, 42) at the two ends (A1, A2) of each opening are geometrically different, in particular in terms of their respective surface areas for covering said opening.
